# EUROPÄISCHE PATENTANMELDUNG

(11) **EP 0 821 045 A1**
(43) Veröffentlichungstag der Anmeldung: **28.01.1998**
(21) Anmeldenummer: 97108553.5
(22) Anmeldetag: 28.05.1997
(51) Int. Cl.: C09K 5/00

(54) **Verwendung von wässrigen Lösungen niederer Alkohole als Kälteträgermittel**

(30) Priorität: 23.07.1996 DE 19629578
(71) Anmelder: HÜLS AKTIENGESELLSCHAFT, 45764 Marl (DE)
(72) Erfinder: Landwehr, Dierk, Dr., 48249 Dülmen (DE)

(57) **Zusammenfassung**

Die Erfindung betrifft die Verwendung einer wäßrigen Lösung eines niederen Alkohols mit einem Zusatz (1) einer niedermolekularen Polycarbonsäure, (2) eines Esters oder Salzes der Sorbinsäure, (3) eines mehrwertigen Alkohols, (4) einer aliphatischen Säure oder eines Salzes einer aliphatischen Säure, (5) eines anionischen Tensids und/oder (6) einer schwefelfreien Triazolverbindung als Kälteträgermittel. Die Erfindung betrifft weiter die Verwendung von hochdisperser Kieselsäure als Sedimentationshemmer in wäßrigen Lösungen niederer Alkohole, die als Flüssigeismichungen dienen.

## Beschreibung

Die Erfindung betrifft die Verwendung von wäßrigen Lösungen niederer Alkoholen mit einem eigenschaftsverbessernden Zusatz, der ein einzelner Stoff oder eine Kombination von Stoffen aus zwei bis sechs verschiedenen Stoffklassen sein kann, als Kälteträgermittel.

Fluorchlorkohlenwasserstoffe (FCKW), wie Difluordichlormethan und Trifluorchlormethan, wurden früher in großem Umfang als Kältemittel verwendet, sind jedoch in Mißkredit geraten, nachdem bekannt geworden ist, daß sie zur Zerstörung der Ozonschicht um die Erde sowie zu dem sogenannten Treibhauseffekt beitragen. Zu den anlagentechnischen Maßnahmen, die auf eine Verminderung der für eine bestimmte Kühlleistung benötigten FCKW-, H-FCKW- oder FKW-Mengen abzielen, gehört die Trennung der Kältesysteme in einen Kältemittel- und einen Kälteträgermittelkreislauf. Dabei wird im erstgenannten Kreislauf die Temperatur des Kältemittels nach wie vor durch Teilverdampfung abgesenkt, und es findet ein indirekter Wärmeaustausch zwischen Kältemittel und Kälteträgermittel statt, das in dem zweiten Kreislauf zirkuliert und an dem gewünschten Ort seine Kühlleistung entfaltet, indem es Wärme aufnimmt. Dieses Prinzip der Trennung von Kältemittel- und Kälteträgermittelkreislauf wird aus wirtschaftlichen Gründen insbesondere in größeren Anlagen, wie Gebäuden mit Klimaanlagen, Supermärkten mit mehreren Kühl- oder Tiefkühltruhen oder Kühlhäusern, auch dann angewandt, wenn keine der genannten Kältemittel verwendet werden.

Als Kälteträgermittel werden derzeit in großem Umfang Solen auf Basis von Ethylen- oder Propylenglykol eingesetzt, die zwar eine hohe spezifische Wärme und daher eine ansprechende Kühlleistung haben. jedoch ein von der Kälteleistung direkt abhängiges Temperaturverhalten zeigen. Daher werden in neuerer Zeit werden zunehmend sogenannte Flüssigeismischungen aus einem wasserlöslichen Alkohol, in der Regel Ethanol, und Wasser, als Kälteträgermittel eingesetzt, die ein günstiges Wärmeübertragungsverhalten aufweisen. Diese Gemische werden in speziell für diesen Zweck konstruierten Eiserzeugern abgekühlt, bis ein Teil des Wassers in Form von feinen Eiskristallen ausfriert. Die Wärmeaustauschflächen werden mechanisch freigehalten, so daß das Wachstum der dort abgeschiedenen Eiskristalle verhindert wird. Das so entstehende Zweiphasen-System, auch als Flüssigeis bezeichnet, wird in geschlossenen Kreisläufen geführt und ist gut pumpbar. Die mittleren Teilchendurchmessern der Eiskristalle im Flüssigeis betragen bei den heute üblichen Systemen auf Basis von Ethanol/Wasser etwa 100 µm. Ein gewisses Problem in Flüssigeis-Systemen ist die Abscheidung von organischem Schleim auf den Wärmeaustauschflächen und/oder in den Rohrleitungen, der den Wärmeaustausch herabsetzt, den Druckverlust im System erhöht und eine häufige Reinigung erforderlich macht.

Es wurde nun gefunden, daß sich wäßrige Lösungen eines niederen Alkohols mit einem Zusatz (1) einer niedermolekularen Polycarbonsäure, (2) eines Esters oder Salzes der Sorbinsäure, (3) eines mehrwertigen Alkohols, (4) einer aliphatischen Säure oder eines Salzes einer aliphatischen Säure, (5) eines anionischen Tensids und/oder (6) einer schwefelfreien Triazolverbindung vorteilhaft als Kälteträgermittel verwenden lassen.

Der erfindungsgemäße Zusatz setzt die mittlere Teilchengröße der Eiskristalle herab. Typische mittlere Teilchengrößen liegen zwischen 20 und 50 µm. Kleinere mittlere Teilchengrößen sind in zweifacher Hinsicht vorteilhaft. Zum einen wird dadurch der Wärmeübergang am Ort der geforderten Kühlleistung verbessert, so daß pro Zeiteinheit kleinere Volumina Kälteträgermittel gefördert werden müssen. Zum anderen sind die rheologischen Eigenschaften des Flüssigeises infolge der kleineren mittleren Teilchengrößen der Eiskristalle erheblich besser. Der Druckverlust im System ist daher geringer, wodurch Pumpenergie eingespart wird. Zudem wird die erwähnte Bildung von organischem Schleim zurückgedrängt.

Die für die Kälteträgermittel geeigneten Alkohole müssen in Wasser zumindest soweit löslich (oder müssen mit Wasser zumindest soweit mischbar) sein, daß ein einphasiges System mit den angegebenen Anteilen beider Stoffe entsteht. Bevorzugt werden mit Wasser unbegrenzt mischbare niedere Alkanole, wie Methanol, Ethanol und Isopropanol, oder Gemische solcher Alkanole. Der bevorzugte Alkohol ist Ethanol, das in den handelsüblichen vergällten Formen eingesetzt werden kann. Das Wasser kann zwar, muß jedoch nicht entsalzt sein. Gut geeignete Kälteträgermittel enthalten 5 bis 30 Volumenprozent Alkohol und 70 bis 95 Volumenprozent Wasser.

Geeignete Zusatze stammen aus den vorerwähnten Stoffklassen (1) bis (6). Von den niedermolekularen Polycarbonsäuren (1) sind z.B. die Hydroxylgruppen enthaltenden und daher hinreichend gut in den wäßrigen Lösungen der Alkohole löslichen Di- und Tricarbonsäuren, wie Äpfelsäure und Weinsäure, als Zusatz geeignet. Zu den brauchbaren Sorbinsäurederivaten (2) zählen Sorbinsäuremethylester, Sorbinsäureethylester und Natriumsorbat. Von den geeigneten mehrwertigen Alkoholen (3) seien als Beispiele Glykol, Dipropylenglykol, Triethylenglykol, Glycerin und Pentaerythrit genannt. Brauchbare aliphatische Säuren (4) oder deren Salze sind z.B. Essigsäure, Propionsäure und Milchsäure sowie deren Alkalisalze. Als Zusatz brauchbare anionische Tenside (5) sind z.B. langkettige Alkylsulfate oder -sulfonate sowie langkettige Alkylarylsulfonate.

Die Zusätze können aus einem oder mehreren Vertretern jeweils einer der genannten Stoffklassen bestehen oder Kombinationen aus mehreren Stoffen aus mehreren verschiedenen Stoffklassen sein. Dazu gehören Kombinationen von zwei Stoffen aus zwei verschiedenen Stoffklassen. nämlich
(1) und (2), (1) und (3), (1) und (4),
(1) und (5), (1) und (6), (2) und (3),
(2) und (4), (2) und (5), (2) und (6),
(3) und (4), (3) und (5), (3) und (6),
(4) und (5), (4) und (6) oder (5) und (6);

Kombinationen von drei Stoffen aus drei verschiedenen Stoffklassen, nämlich
(1), (2) und (3), (1), (2) und (4), (1), (2) und (5),
(1), (2) und (6), (1), (3) und (4), (1), (3) und (5),
(1), (3) und (6), (1), (4) und (5), (1), (4) und (6),
(1), (5) und (6), (2), (3) und (4), (2), (3) und (5),
(2), (3) und (6), (3), (4) und (5), (3), (4) und (6),
(3), (5) und (6) oder (4), (5) und (6);

Kombinationen von vier Stoffen aus vier verschiedenen Stoffklassen. nämlich
(1), (2), (3) und (4), (1), (2), (3) und (5),
(1), (2), (3) und (6), (1), (3), (4) und (5),
(1), (3), (4) und (6), (1), (3), (5) und (6),
(2), (3), (4) und (5), (2), (3), (4) und (6),
(2), (3), (5) und (6) oder (3), (4), (5) und (6);
sowie Kombinationen von sechs Stoffen aus sechs verschiedenen Stoffklassen (1) bis (6).

Die wäßrigen Lösungen, deren Verwendung Gegenstand der Erfindung ist, enthalten die genannten Stoffe im allgemeinen in Mengen von 0,005 bis 5 Gewichtsprozent, vorteilhaft von 0,1 bis 0,5 Gewichtsprozent, bezogen auf das Gewicht der gesamten wäßrigen Lösung einschließlich Zusatz. Die optimalen Mengen hängen u.a. von der erwünschten mittleren Teilchengröße, dem verwendeten niederen Alkohol, dessen Konzentration in der wäßrigen Lösung sowie von der angestrebten Kühltemperatur ab und können durch orientierende Versuche leicht ermittelt werden.

Die wäßrigen Lösungen können weitere, für Kälteträgermittel übliche Zusatzstoffe enthalten, wie zusätzliche Fließhilfsmittel oder Schauminhibitoren. Das günstige Eigenschaftsbild der Kälteträgermittel wird dadurch nicht beeinträchtigt.

Ein Zusatz von kleinen Mengen hochdisperser Kieselsäure wirkt der Sedimentation der Eiskristalle entgegen, die nicht selten und besonders im unbewegten Zustand zu beobachten ist. Hierfür eignet sich z.B. pyrogenes Siliciumdioxid mit mittleren Teilchengrößen im Bereich von etwa 5 bis etwa 20 nm. Hydrophile Produkte dieser Art werden bevorzugt. Brauchbares pyrogenes Siliciumdioxid ist u.a. unter den Bezeichnungen Aerosil^{(R)} oder Cabot-Sil^{(R)} im Handel ist. Aber auch andere, nicht pyrogene hochdisperse Kieselsäuren mit ähnlichen mittleren Teilchengrößen sind wirksame Sedimentationshemmer. Die Sedimentationshemmung tritt übrigens bei allen bekannten wäßrigen Lösungen niederer Alkohole ein, die als Flüssigeismischungen verwendet werden, unabhängig davon, ob sie Zusatzstoffe nach der Erfindung und/oder andere Zusatzstoffe enthalten.

Die Stoffmischungen nach der Erfindung können in allen üblichen Kälteanlagen mit getrennten Kreisläufen für Kältemittel und Kälteträgermittel verwendet werden. Die erreichbaren Minusgrade hängen von dem verwendeten Alkohol und von dem Mengenverhältnis von Alkohol und Wasser ab. Bei 10 bis 20 Gewichtsprozent Ethanol kann man etwa -15°C erreichen, ohne daß der mit sinkender Temperatur immer größer werdende Anteil der Eiskristalle den Energiebedarf für den Kälteträgermittelkreislauf erheblich ansteigen läßt.

Das folgende Beispiel soll die Erfindung erläutern, nicht jedoch ihren Umfang begrenzen, wie er in den Patentansprüchen definiert ist.

### Beispiel

In einer üblichen Kühlanlage mit Ammoniak als Kältemittel wird eine Stoffmischung aus 10 Volumenprozent handelsüblichem, mit Methylethylketon vergälltem Ethanol, 90 Volumenprozent Wasser und 0,2 Gewichtsprozent eines Gemisches, das sechs Stoffe aus jeweils einer der Stoffklassen (1) bis (6) enthält (von IWC International, Marl, BR Deutschland als Corrogard^{(R)} 36 erhältlich), als Kälteträgermittel verwendet. Der Druckverlust im System beträgt 0,45 bar, die für die geforderte Kühlleistung benötigte spezifische Durchflußmenge Kälteträgermittel 92 l/min. Nach 3 Monaten ununterbrochenem Betrieb zeigte sich an den Wärmeaustauschflächen aus V2A-Stahl und in den Rohrleitungen aus Kupfer keinerlei Korrosion und/oder Ansammlungen von organischem Schleim.

Durch den Zusatz von 0,1 Massen-% hochdisperser Kieselsäure (Cabot-Sil^{(R)}EH5) wird die Sedimentationsneigung, die das Flüssigeis besonders im Ruhezustand zeigt, zuverlässig unterdrückt.

Bei Verwendung eines sonst gleichen Kälteträgermittels ohne Additiv betrugen unter sonst gleichen Bedingungen der Druckverlust 0,51 bar und die spezifische Durchflußmenge des Kälteträgermittels 103 l/min. Der Mehrbedarf an Energie für den Kälteträgermittelkreislauf beträgt somit rund 20%.

## Patentansprüche

1. Verwendung einer wäßrigen Lösung eines niederen Alkohols mit einem Zusatz (1) einer niedermolekularen Polycarbonsäure, (2) eines Esters oder Salzes der Sorbinsäure, (3) eines mehrwertigen Alkohols, (4) einer aliphatischen Säure oder eines Salzes einer aliphatischen Säure, (5) eines anionischen Tensids und/oder (6) einer schwefelfreien Triazolverbindung als Kälteträgermittel.

2. Verwendung nach Anspruch 1, dadurch gekennzeichnet, daß als Zusatz eine Kombination von zwei Stoffen aus zwei verschiedenen Stoffklassen, nämlich
(1) und (2), (1) und (3), (1) und (4),
(1) und (5), (1) und (6), (2) und (3),
(2) und (4), (2) und (5), (2) und (6),
(3) und (4), (3) und (5), (3) und (6),
(4) und (5), (4) und (6) oder (5) und (6),
verwendet wird.

3. Verwendung nach Anspruch 1, dadurch gekennzeichnet, daß als Zusatz eine Kombination von drei Stoffen aus drei verschiedenen Stoffklassen, nämlich
(1), (2) und (3), (1), (2) und (4), (1), (2) und (5),
(1), (2) und (6), (1), (3) und (4), (1), (3) und (5),
(1), (3) und (6), (1), (4) und (5), (1), (4) und (6),
(1), (5) und (6), (2), (3) und (4), (2), (3) und (5),
(2), (3) und (6), (3), (4) und (5), (3), (4) und (6)
oder (3), (5) und (6),
verwendet wird.

4. Verwendung nach Anspruch 1, dadurch gekennzeichnet, daß als Zusatz eine Kombination von vier Stoffen aus vier verschiedenen Stoffklassen, nämlich
(1), (2), (3) und (4), (1), (2), (3) und (5),
(1), (2), (3) und (6), (1), (3), (4) und (5),
(1), (3), (4) und (6), (1), (3), (5) und (6),
(2), (3), (4) und (5), (2), (3), (4) und (6),
(2), (3), (5) und (6) oder (3), (4), (5) und (6),
verwendet wird.

5. Verwendung nach Anspruch 1, dadurch gekennzeichnet, daß als Zusatz eine Kombination von fünf Stoffen aus fünf verschiedenen Stoffklassen, nämlich
(1), (2), (3), (4) und (5),
(1), (2), (3), (4) und (6),
(1), (2), (3), (5) und (6),
(1), (2), (4), (5) und (6),
(1), (3), (4), (5) und (6) oder
(2), (3), (4), (5) und (6)
verwendet wird.

6. Verwendung nach Anspruch 1, dadurch gekennzeichnet, daß als Zusatz eine Kombination von sechs Stoffen aus sechs verschiedenen Stoffklassen (1) bis (6) verwendet wird

7. Verwendung von hochdisperser Kieselsäure als Sedimentationshemmer in wäßrigen Lösungen niederer Alkohole, die als Flüssigeismischungen dienen.
